# EUROPÄISCHE PATENTSCHRIFT

(11) **EP 1 654 110 B1**
(45) Veröffentlichungstag und Bekanntmachung des Hinweises auf die Patenterteilung: **29.08.2018**
(21) Anmeldenummer: 04766425.5
(22) Anmeldetag: 05.08.2004
(51) Int. Cl.: F03D 1/06, B29C 70/70, B29C 70/86, B29D 24/00, B64C 27/473, B29L 31/08

(54) **WINDENERGIEANLAGE-ROTORBLATT**
ROTOR BLADE FOR A WIND POWER INSTALLATION
PALE DE ROTOR POUR EOLIENNE

(30) Priorität: 05.08.2003 DE 10336461
(43) Veröffentlichungstag der Anmeldung: 10.05.2006
(73) Patentinhaber: Wobben Properties GmbH, 26607 Aurich (DE)
(72) Erfinder: Wobben, Aloys, 26607 Aurich (DE)
(74) Vertreter: Eisenführ Speiser
(86) Internationale Anmeldenummer: PCT/EP2004/051720
(87) Internationale Veröffentlichungsnummer: WO 2005/011964

(56) Entgegenhaltungen:
- WO-A-01/26899
- DE-A- 2 109 934
- US-A- 3 237 697
- US-A- 4 789 577
- US-A- 4 798 549
- US-A- 5 127 802

## Beschreibung

Die vorliegende Erfindung betrifft ein Windenergieanlagen-Rotorblatt. Ferner betrifft die Erfindung ein Verfahren zur Herstellung eines Rotorblattes, in Faserverbundbauweise.

Ein derartiges Verfahren ist insbesondere im Bereich der Windenergie seit langem bekannt und erlaubt die Herstellung von Rotorblättern mit einer zuverlässigen Verbindung zwischen der Tragstruktur und den die äußere Kontur des Rotorblattes bildenden Schalen, da jeweils die gleichen Materialien verwendet werden.

Dabei werden Halbschalen, z. B. aus Faserverbundwerkstoff, wie Glasfaser und Epoxidharz, hergestellt, welche die äußere Form des Rotorblatts bestimmen. Da solche Rotorblätter durchaus Längen von mehr als 50 Metern erreichen, treten Lasten auf, die aufgenommen und abgetragen werden müssen. Dies geschieht über die in dem Rotorblatt vorgesehene Tragstruktur.

Eine solche bekannte Tragstruktur besteht aus sogenannten Roving-Gurten. Dabei handelt es sich um Stränge von Fasermaterial, wie Kohlefaser oder, bevorzugt wegen der geringen Kosten, Glasfaser. Diese Stränge erstrecken sich teilweise durchgehend über die gesamte Länge der Tragstruktur bzw. des Rotorblatts. Mit zunehmender Nähe zur Rotorblattwurzel nimmt auch die zahl der Gurte zu, um die höheren Lasten durch größere Blattdicke und Blatttiefe aufzunehmen und abzuleiten.

Um eine ausreichende Belastbarkeit zu erzielen, wird eine entsprechend große Anzahl dieser Roving-Gurte verwendet. Diese werden vor dem Einlegen in die vorgefertigte Rotorblatt-Schale mit einem Polymer, wie z. B. Epoxidharz, getränkt. Dieses Tränken kann natürlich ebenso durch Zufuhr des Polymers von außen wie auch durch ein Injektionsverfahren erfolgen. Die getränkten Roving-Gurte werden dann an den vorgesehenen Stellen in die Schale des Rotorblattes eingelegt. Da das Rotorblatt aus dem gleichen Material hergestellt ist, ergibt sich eine ausgezeichnete Verbindung zwischen der Schale und den Roving-Gurten.
Da diese Roving-Gurte "nass" in die Schale gelegt werden, kann es dabei jedoch leicht zu Verformungen kommen, da diese nassen Gurte nicht biegesteif sind. Solche Verformungen werden auch als "Ondulierungen" bezeichnet und führen nach dem Aushärten zu einer Federwirkung an dieser Stelle. Dadurch wird die Steifigkeit der Tragstruktur bzw. des Blattes beeinträchtigt.
Weiterhin ist das Aushärten des Polymers ein exothermer Vorgang, bei dem entsprechend Wärme nach außen abgegeben wird. Bei Tragstrukturen aus einer Vielzahl von Roving-Gurten ist auch eine entsprechend große Menge von Epoxidharz erforderlich, um eine ausreichende Verbindung herzustellen. Entsprechend intensiv ist die exotherme Reaktion und entsprechend hoch ist die abgegebene Wärmemenge.
Als allgemeiner Stand der Technik sei auf die Dokumente DE 44 23 115 A1, DE-AS 1 264 266 und DE 2 109 934 verwiesen.
US 5,127,802 A beschreibt eine Tragstruktur für ein Rotorblatt einer Rotationsmaschine, wobei das Rotorblatt in Faserverbundweise ausgebildet ist, mit einer sich entlang einer Länge des Rotorblatts erstreckenden Tragstruktur, welches mit einem Epoxidharz getränkten Faserbündel vorgegebener Länge und ferner integrierte vorgefertigte biegesteife Komponenten aufweist, wobei die biegesteifen Komponenten Faserbündel und Epoxidharz aufweisen, wobei die biegesteifen Komponenten fertig ausgehärtet sind. Aufgabe der vorliegenden Erfindung ist es daher, ein Verfahren der eingangs genannten Art derart weiterzubilden, dass die exotherme Reaktion beschränkt und die Gefahr von Ondulierungen verringert ist.
Die Aufgabe wird erfindungsgemäß mit einem Rotorblatt einer Windenergieanlage mit dem Merkmal nach Anspruch 1 sowie einem Verfahren zur Herstellung eines Rotorblatts einer Windenergieanlage mit dem Merkmal nach Anspruch 4 gelöst. Vorteilhafte Weiterbildungen sind in den Unteransprüchen beschrieben.
Erfindungsgemäß wird also vorgeschlagen, vorgefertigte, biegesteife Komponenten in eine Tragstruktur integriert werden. Dabei liegt der Erfindung die Erkenntnis zu Grunde, dass vorgefertigte Komponenten, auch wenn sie wiederum aus einem Faserverbundsystem, wie Kohlefaser- oder Glasfaser-Gurten und einem Polymer, aufgebaut sind, bereits ausgehärtet sind und somit eine entsprechende Verringerung des nass zu verarbeitenden Materials erlauben und somit zu einer verringerten exothermen Reaktion führen. Weiterhin versteifen diese vorgefertigten Komponenten die nassen Bestandteile und tragen so zur Verhinderung der Ondulierungen, d.h. der unerwünschten Verformungen der Faserstränge, bei.

Dabei ist ein weiterer Vorteil der Verwendung vorgefertigter Komponenten, dass diese separat hergestellt und einer Qualitätskontrolle unterworfen werden können.
Durch die damit sichergestellte Qualität dieser Komponenten und die geringere Exothermie verbessert sich insgesamt auch die Qualität der Tragstrukturen. Besonders bevorzugt weisen diese vorgefertigten Komponenten eine Länge auf, die im Wesentlichen der Länge der aufzubauenden Tragstruktur entspricht. Dadurch wird eine durchgehende Struktur verwirklicht, die ebenfalls einen durchgehenden Kraftfluss erlaubt.
Vorteilhafte Ausführungsformen der Erfindung sind in den Unteransprüchen angegeben.
Nachfolgend wird die Erfindung anhand der Figuren näher erläutert. Dabei zeigen:
- Fig. 1: eine vereinfachte Querschnittsdarstellung durch ein Rotorblatt;
- Fig. 2: eine vereinfachte Innenansicht einer Rotorblatt-Schale;
- Fig. 3: eine vereinfachte Darstellung einer bekannten Tragstruktur;
- Fig. 4: eine vereinfachte Darstellung einer Tragstruktur, die die Erfindung nicht entspricht.
- Fig. 5: eine vergrößerte Querschnittsdarstellung einer vorgefertigten Komponente; und
- Fig. 6: einer Ausführungsform einer erfindungsgemäßen Tragstruktur.

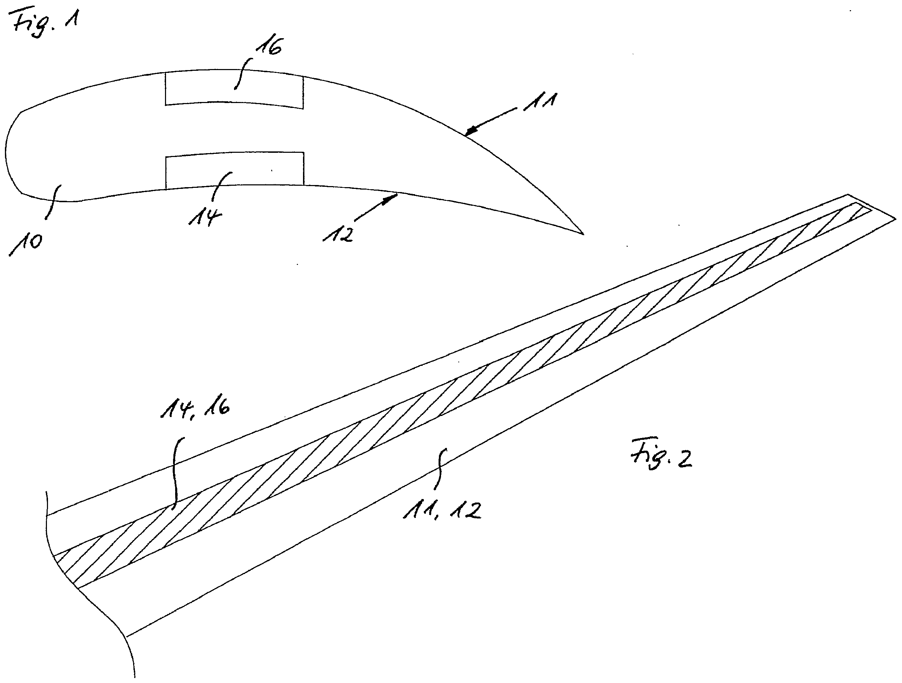

In Figur 1 ist ein Rotorblatt 10 für eine Windenergieanlage vereinfacht im Querschnitt dargestellt. Dieses Rotorblatt umfasst eine obere Schale 11 und eine untere Schale 12. In diesen Schalen 11 und 12 sind Tragstrukturen 14, 16 vorgesehen, welche die am Rotorblatt 10 angreifenden Lasten aufnehmen und abtragen.
Figur 2 zeigt vereinfacht die Innenansicht einer solchen Schale 11, 12. An einer vorgegebenen Position einer Schale 11, 12 ist eine Tragstruktur 14, 16 vorgesehen, die sich über die gesamte Länge der Schale 11, 12 und damit über die gesamte Länge des daraus hergestellten Rotorblatts erstreckt.

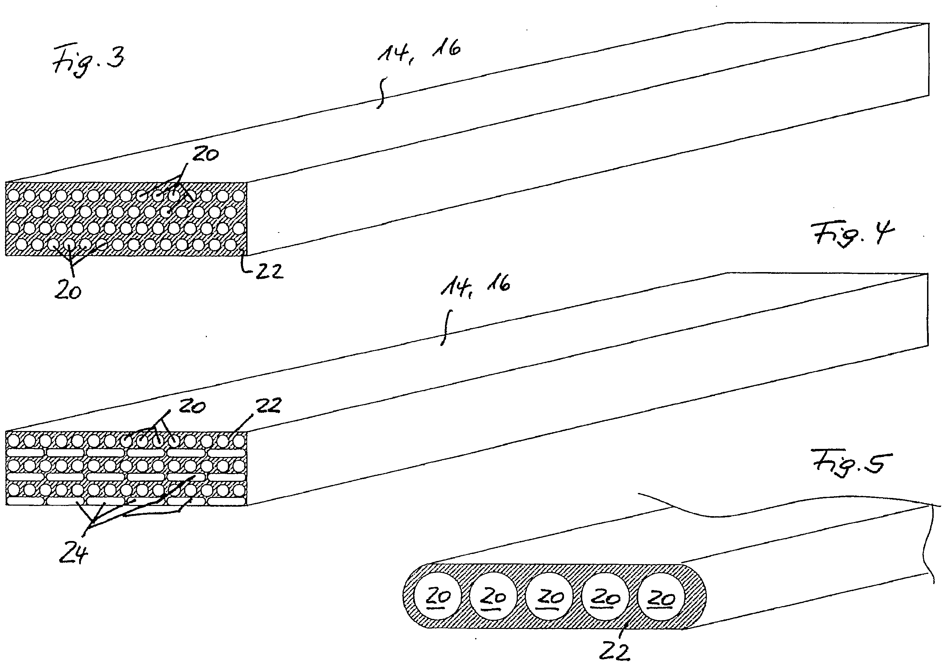

In Figur 3 ist wiederum vereinfacht der Aufbau einer bekannten Tragstruktur 14, 16 dargestellt. Diese Tragstruktur ist aus Faserbündeln 20, den sogenannten Roving-Gurten, gebildet, die von einem Epoxidharz 22 umschlossen sind. Natürlich kann dieser Faserwerkstoff eine Kohlefaser, Glasfaser oder jede andere geeignete Faser sein. Weiterhin ist anzumerken, dass die in dieser Figur dargestellte kreisrunde Bündelung der Roving-Gurte 20 nur der Veranschaulichung dient. In der Realität sind die Bündel beliebig verformt.
Bereits bei dieser Figur ist leicht erkennbar, dass eine solche (nasse) Anordnung von Gurten 20 und Epoxidharz 22 gerade bei den beträchtlichen Längen stets der Gefahr einer Verformung, sogenannter Ondulierungen, unterliegt.
Figur 4 zeigt eine Ausführungsform einer Tragstruktur 14, 16, die die Erfindung nicht entspricht.

Auch in dieser Tragstruktur 14, 16 sind Roving-Gurte 20 vorgesehen, die in dem Epoxidharz 22 eingebettet sind. Allerdings sind hier deutlich die vorgefertigten Komponenten 24 zu erkennen, die in die Tragstruktur 14, 16 eingefügt sind. Diese können sich über die gesamte Länge erstrecken und bilden Lagen, die im Stande sind, die Roving-Gurte 20 zu tragen.

Da die vorgefertigten Komponenten 24 bereits ihre End-Biegesteifigkeit aufweisen, bilden sie ein Stützgerüst, das Verformungen der Roving-Gurte 20 verhindert. Entsprechend sind die damit aufgebauten Tragstrukturen 14, 16 von hoher Qualität.

Figur 5 zeigt ein Beispiel einer vorgefertigten Komponente 24 vergrößert in einer quergeschnittenen Ansicht. Wie in dieser Figur erkennbar ist, kann diese vorgefertigte Komponente 24 wiederum aus Roving-Gurten 20 und Epoxidharz 22 aufgebaut sein. Allerdings ist sie zum Zeitpunkt des Einbaus in die Tragstruktur 14, 16 bereits fertig ausgehärtet, führt aber durch die Materialwahl zu einer innigen Verbindung in der erfindungsgemäßen Tragstruktur 14, 16 und stellt so einen einwandfreien Kraftfluss sicher.

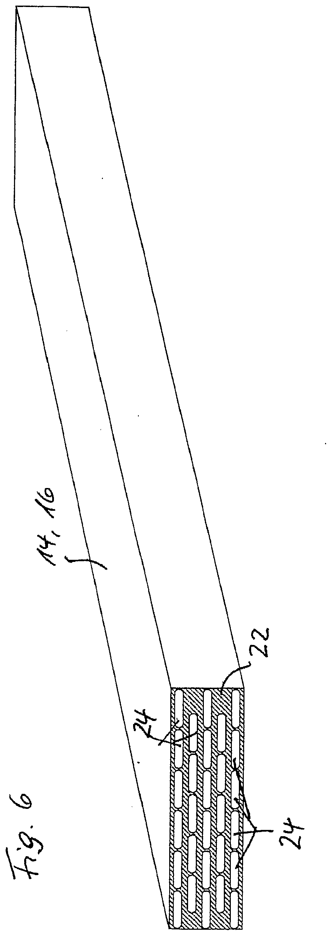

Figur 6 zeigt eine Ausführungsform einer erfindungsgemäßen Tragstruktur 14, 16. Dabei ist in dieser Figur zur Vereinfachung die Anordnung der Roving-Gurte 20 zwischen den vorgefertigten Komponenten 24 nicht dargestellt. Weiterhin ist in dieser Figur erkennbar, dass die vorgefertigten Komponenten 24 hier nicht in einzelnen Spalten untereinander, sondern reihenweise versetzt zueinander angeordnet sind.

Diese Anordnung führt zu einer nochmals verbesserten Festigkeit der erfindungsgemäßen Tragstruktur 14, 16.

Das erfindungsgemäße Rotorblatt zeichnet sich durch eine erheblich bessere Stabilität aufgrund des Einsatzes der vorgefertigten Komponenten aus. Dabei können Zugkräfte aufgenommen werden, die deutlich größer sind als bei bisherigen Rotorblättern.

Vorliegend wurde eine Ausgestaltung der Erfindung anhand eines Rotorblattes als eine Möglichkeit eines Formkörpers beschrieben. Anstatt eines Rotorblattes kann die Erfindung auch sehr vorteilhaft für Flugzeugtragflächen, Schiffe und andere Formkörper eingesetzt werden, bei welchen bei einer hohen Festigkeit dennoch eine große dynamische Belastbarkeit gefordert ist.

## Patentansprüche

1. Windenergieanlagen-Rotorblatt (10), wobei das Rotorblatt in Faserverbundweise ausgebildet ist, mit
einer sich entlang einer Länge des Rotorblatts (10) erstreckenden Tragstruktur (16, 14), welches mit einem Epoxidharz getränkten Faserbündel (20) vorgegebener Länge und ferner integrierte vorgefertigte biegesteife Komponenten (24) aufweist, wobei die biegesteifen Komponenten (24) Faserbündel (20) und Epoxidharz (22) aufweisen, wobei die biegesteifen Komponenten fertig ausgehärtet sind, **dadurch gekennzeichnet, dass** die vorgefertigten Komponenten (24) reihenweise versetzt zueinander angeordnet sind.

2. Rotorblatt nach Anspruch 1, wobei die Länge der vorgefertigten Komponenten (24) abhängig von der Einbauposition der biegesteifen Komponenten im Rotorblatt ist.

3. Windenergieanlage mit einem Rotorblatt nach einem der Ansprüche 1 bis 2.

4. Verfahren zur Herstellung eines Rotorblattes einer Windenergieanlage in Faserverbundbauweise mit den Schritten:
- Herstellen von die äußere Kontur des Rotorblattes (10) bildenden Schalen (11, 12),
- Herstellen von Tragstrukturen (14, 16) aus Faserbündel (20) vorgegebener Länge, wobei die Faserbündel mit einem aushärtenden Verbundwerkstoff (22) getränkt werden, und
- Transportieren der Tragstruktur (14, 16) in die Schalen, wobei ferner vorgefertigte biegesteife Komponenten (24) in die Tragstruktur (14, 16) integriert werden,
wobei die biegesteifen Komponenten (24) Faserbündel (20) und Epoxidharz (22) aufweisen, wobei die biegesteifen Komponenten fertig ausgehärtet sind und sich über eine gesamte Länge der Tragstrukturen (14, 16) erstrecken und Lagen ausbilden, **dadurch gekennzeichnet, dass**
die vorgefertigten Komponenten (24) reihenweise versetzt zueinander angeordnet sind.

5. Verfahren nach einem der Ansprüche 3 bis 4, **dadurch gekennzeichnet, dass** die vorgefertigten Komponenten (24) einer vorgegebenen Länge verwendet werden, wobei die Längen bevorzugt abhängig sind von den Einbaupositionen der Komponenten im Formkörper.

6. Verfahren nach Anspruch 5,
**dadurch gekennzeichnet, dass** vorgefertigte Komponenten (24) verwendet werden, die sich angepasst an die Belastung in den Schalen (11, 12) erstrecken.

## Claims

1. A wind power installation rotor blade (10), wherein the rotor blade is of a fibre composite structure, comprising
a bearing structure (16, 14) extending along a length of the rotor blade (10) comprising fibre strands (20) of predetermined length being impregnated with epoxy resin and further integrated prefabricated, flexurally stiff components (24), wherein the flexurally stiff components (24) comprise fibre bundles (20) and epoxy resin (20), wherein the flexurally stiff components are already hardened, **characterized in that** the prefabricated components (24) are arranged in displaced row-wise relationship with each other.

2. Rotor blade according to claim 1, wherein the length of the prefabricated components (24) depends on the position of installation of the flexurally stiff components in the rotor blade.

3. Wind power installation, comprising a rotor blade according to one of the claims 1 to 2.

4. Method of producing a rotor blade of a wind power installation of a fibre composite structure, comprising the steps of:
- producing shells (11, 12) forming the outer contour of the rotor blade (10),
- producing bearing structures (14, 16) of fibre strands (20) of predetermined length which are impregnated with a hardening composite material (22), and
- transporting the bearing structure (14, 16) in the shells,
wherein further prefabricated flexurally stiff components (24) are integrated into the bearing structure (14, 16),
wherein the flexurally stiff components (24) comprise fibre bundles (20) and epoxy resin (22),
wherein the flexurally stiff components are already hardened and extend along the entire length of the bearing structure (14, 16) and form layers,
**characterized in that** the prefabricated components (24) are arranged in displaced row-wise relationship with each other.

5. Method according to one of the claims 3 to 4, **characterized in that** the prefabricated components (24) of a predefined length are used wherein the lengths are dependent on the position of installation of the component in the shape body.

6. Method according to claim 5, **characterized in that** prefabricated components (24) are used which extend in the shells (11, 12) adapted to the loading.

## Revendications

1. Pale de rotor d'éolienne (10), dans laquelle la pale de rotor est réalisée à la manière d'un composite de fibres, avec
une structure porteuse (16, 14) s'étendant le long d'une longueur de la pale de rotor (10), laquelle présente des faisceaux de fibres (20) d'une longueur prédéfinie, imprégnés d'une résine époxy et en outre des composants (24) rigides en flexion préfabriqués intégrés, dans laquelle les composants (24) rigides en flexion présentent des faisceaux de fibres (20) et une résine époxy (22), dans laquelle les composants rigides en flexion sont finalisés par durcissement, **caractérisée en ce que** les composants (24) préfabriqués sont disposés en ligne de manière décalée les uns par rapport aux autres.

2. Pale de rotor selon la revendication 1, dans laquelle la longueur des composants (24) préfabriqués dépend de la position de montage des composants rigides en flexion dans la pale de rotor.

3. Eolienne avec une pale de rotor selon l'une quelconque des revendications 1 à 2.

4. Procédé servant à fabriquer une pale de rotor d'une éolienne à la manière d'un composite à base de fibres avec les étapes de :
- fabrication de coques (11, 12) formant le contour extérieur de la pale de rotor (10),
- fabrication de structures porteuses (14, 16) à partir de faisceaux de fibres (20) d'une longueur prédéfinie, dans lequel les faisceaux de fibres sont imprégnés d'un matériau composite (22) de durcissement, et
- transport de la structure porteuse (14, 16) dans les coques,
dans lequel en outre des composants (24) rigides en flexion préfabriqués sont intégrés dans la structure porteuse (14, 16),
dans lequel les composants (24) rigides en flexion présentent des faisceaux de fibres (20) et une résine époxy (22), dans lequel les composants rigides en flexion sont finalisés par durcissement et s'étendent sur l'ensemble d'une longueur des structures porteuses (14, 16) et forment des couches,
**caractérisé en ce que**
les composants (24) préfabriqués sont disposés en ligne de manière décalée les uns par rapport aux autres.

5. Procédé selon l'une quelconque des revendications 3 à 4,
**caractérisé en ce que** les composants (24) préfabriqués d'une longueur prédéfinie sont utilisés, dans lequel les longueurs dépendent de manière préférée des positions de montage des composants dans le corps moulé.

6. Procédé selon la revendication 5,
**caractérisé en ce que** des composants (24) préfabriqués sont utilisés, qui s'étendent dans les coques (11, 12) de manière adaptée à la contrainte.
